# EUROPEAN PATENT SPECIFICATION

(11) **EP 0 763 933 B1**
(45) Date of publication and mention of the grant of the patent: **24.03.2004**
(21) Application number: 96113601.7
(22) Date of filing: 24.08.1996
(51) Int. Cl.: H04N 5/14

(54) **Method for detecting motion in a video signal**
Verfahren zur Bewegungsdetektion in einem Videosignal
Méthode de détection de mouvement dans un signal vidéo

(30) Priority: 31.08.1995 FI 954083
(43) Date of publication of application: 19.03.1997
(73) Proprietor: NOKIA TECHNOLOGY GmbH, 44807 Bochum (DE)
(72) Inventor: Koivunen, Tero, c/o Nokia Techn. GmbH, 75175 Pforzheim (DE)
(74) Representative: Kupiainen, Juhani Kalervo

(56) References cited:
- DE-A- 2 937 284
- KOIVUNEN: "motion detection of an interlaced video signal" IEEE TRANSACTIONS ON CONSUMER ELECTRONICS., vol. 40, no. 3, August 1994, NEW YORK US, pages 753-759, XP000471245
- KOIVUNEN: "a noise-insensitive motion detector" IEEE TRANSACTIONS ON CONSUMER ELECTRONICS., vol. 38, no. 3, August 1992, NEW YORK US, pages 168-174, XP000311832

## Description

The invention relates to a method for detecting motion in a digital video signal, wherein the pixels of at least two successive fields are used and the pixels of at least one field are stored and differences are produced for the pixels of the fields in a predetermined manner.

The invention also relates to an apparatus for detecting motion.

Motion detection is used as a control signal in so-called motion adaptive methods, e.g. to increase the number of lines and/or field frequency in a television receiver and for various standard conversions as well as for noise reduction and image sharpening. Motion detection can also be advantageously used in image encoding. In the above-mentioned motion adaptive methods a signal is usually processed in two blocks depending on whether the picture is a moving or an non-moving one. It has been noticed that motion adaptive methods are well suited for all the above-mentioned applications.

The video signal examined is always a digital video signal, usually in the form of a Y/C (luminance/chrominance) signal, in which case the motion detection is most conveniently performed on the basis of the luminance signal. Motion detection can also be performed for an RGB-type video signal, but then it is needed three identical channels in the system, one for each signal component. Then the motion decision is generated as an OR operation, which means that if a change is detected in any of the signal components of the sample examined, the sample in question is moving. In this description, a sample means a digital value corresponding to one pixel, which means that in the case of a luminance signal a sample is the brightness value of one pixel, given in the form of a digital, usually 8-bit, number. Correspondingly, in the case of an RGB video signal, a sample comprises three digital values, each of which corresponds to the brightness value of one signal component (red, green, blue).

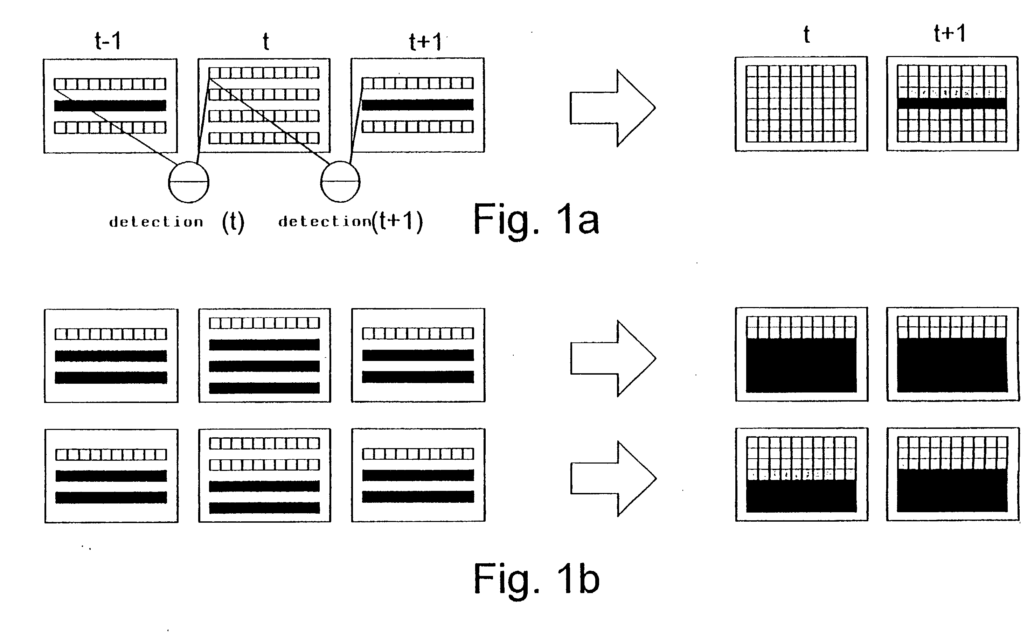

Known motion detection methods are usually based on difference signals calculated using the samples of two images, and on moving/non-moving decisions made on the basis of those difference signals. An important application for motion detection is the conversion from interlaced video signal to non-interlaced video signal, or progressive video signal (Interlaced to Progressive Conversion, IPC). In the conversion, interpolation is usually performed in a manner such that pixels defined as non-moving are positioned directly from the corresponding locations in the preceding field and pixels defined as moving are calculated e.g. by averaging the corresponding pixels of the lines preceding and following the pixel examined. Figs. 1a and 1b are simplified illustrations of the operation of such an IPC conversion controlled by motion detection according to the prior art. An interlaced video signal, in which, depending on the case, a thin dark line (Fig. 1a) or an edge (Fig. 1b) is seen against a white background, is shown on the left, as well as the locations on the line of the samples of the difference signal on which the motion detection is based. The resulting progressive image is shown on the right. In the examples of Figs. 1a and 1b the input fields and output fields are indexed correspondingly so that e.g. output image t is produced by interpolating input fields t-1 and t using the difference indicated by detection t. Shades of gray are used to represent new hue values produced by averaging, for example.

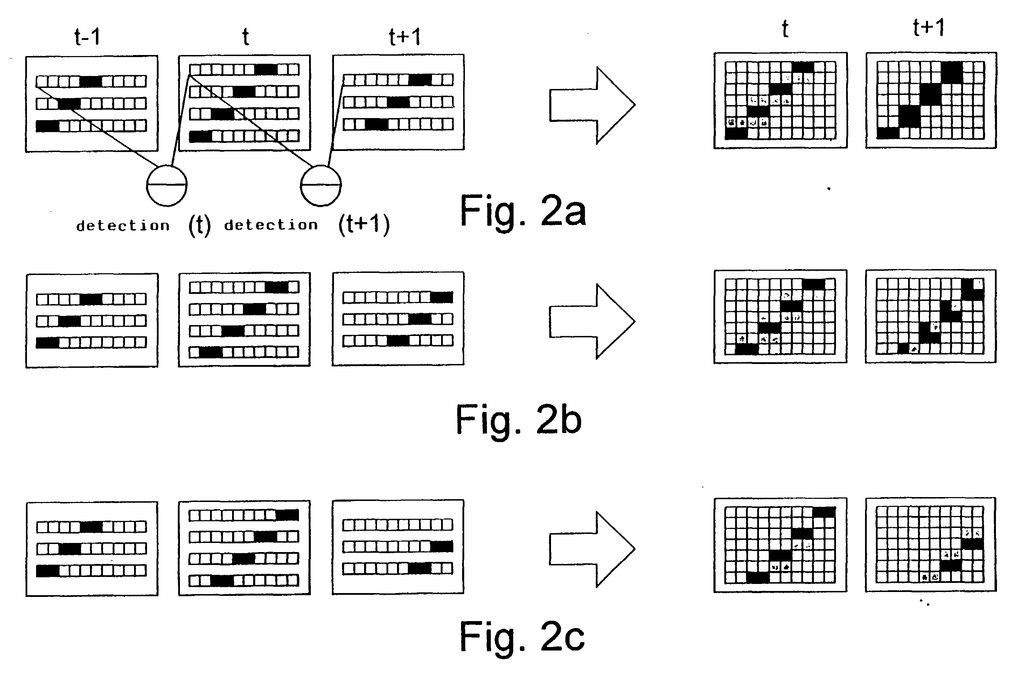

In its simplest form the motion detector can be realized using one field memory. Then, by comparing two successive fields it is possible to determine on basis of the difference of the corresponding lines in these fields whether the pixel in question has changed, i.e. moved. A disadvantage of this method, caused by the interlacing of the TV signal, is the fact that previous findings do not absolutely correspond to the same pixel at different moments of time, wherefore said motion decisions cannot be made with certainty. A simple example of a situation in which a detector with one field memory produces an error is a stationary image containing a lot of detail. High vertical frequencies will then be mistakenly interpreted as motion, as shown in Fig. 1a. In Fig. 1a the line disappears alternately in the progressive output image causing in this application clearly perceptible line flicker. The non-moving horizontal edge in Fig. 1b is detected perfectly or with the inaccuracy of one line, depending wholly on the location of the edge with respect to the location of the corresponding pixels used in the detection. General functionality of the method is illustrated in Figs. 2a, 2b and 2c by means of a diagonal bar moving horizontally. The bar, which is two samples wide, moves in Fig. 2a at the rate of one sample per field, in Fig. 2b at two samples per field and in Fig. 2c at the rate of three samples per field. This illustration can easily be generalized to apply, respectively, to a bar that moves at a field rate lower than its width, corresponding to its width or higher than its width. Figs. 2a, 2b and 2c show that a completely error-free result is not achieved in any of he cases mentioned above.

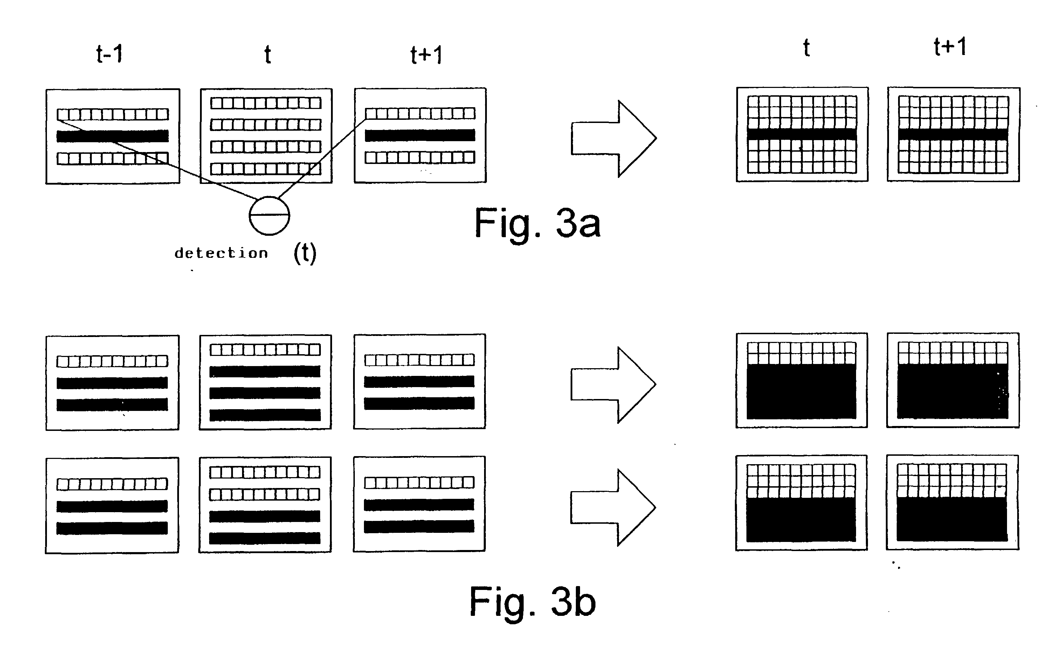

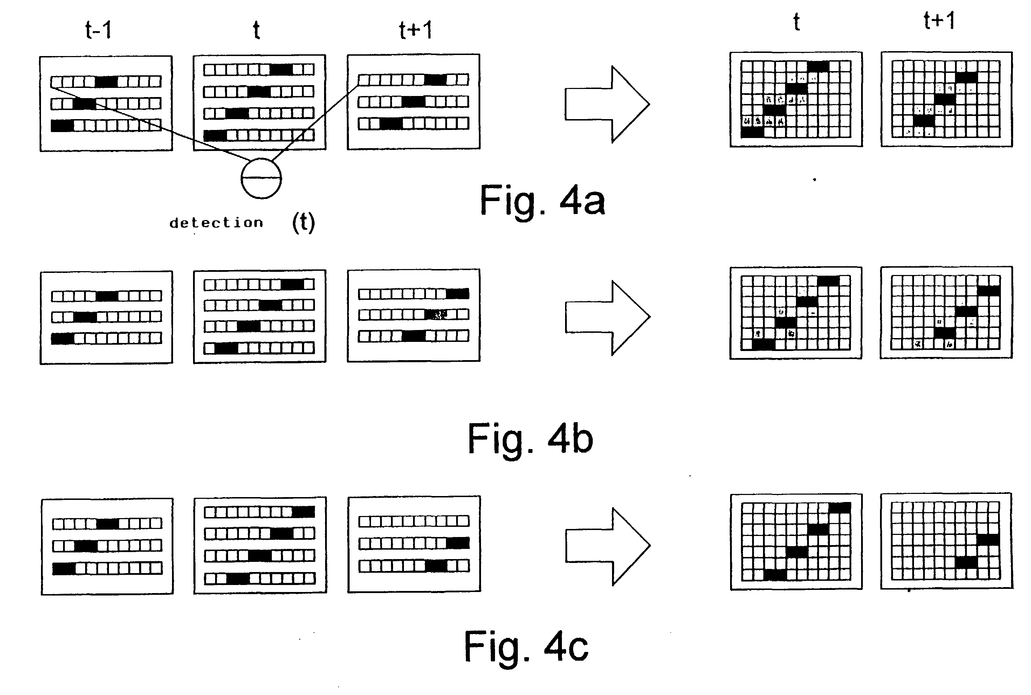

A detector using one whole frame memory, i.e. two field memories, works better than a corresponding motion detector using one field memory. Unlike in the case above, samples at corresponding locations in the line raster are compared. Thus it is possible to avoid errors like those illustrated in Figs. 1a and 1b which are caused by incorrect interpretation of stationary details. Examples corresponding to Figs. 1a and 1b are shown in Figs. 3a and 3b. Both in the case of a non-moving line and in the case of an edge the result is as desired. Generally, it can be said that the implementation of a high-quality motion detector requires at least one frame memory. Again, general functionality of the method can be examined by means of a diagonal bar moving horizontally at different speeds, shown in Figs. 4a to 4c. Compared to a detector using one field memory the method is somewhat better but obviously its performance is not the best possible. The moving bar still gets broken at all speeds. The methods operate in the same way only when there is very little motion and then only part of the time, as can be seen from Figs. 2a and 4a, field t.

A movement detection system including a detector arrangement for detecting the movement between a plurality of picture points from a selected portion of the picture is described in document DE 29 37 284 A (D1). This document states that the picture points used in movement detection are a subset of a group of nine picture points on three adjacent lines originating from two adjacent video fields. This does not provide adequate temporal dispersion, but that in fact in some cases more than two fields of video memory are needed for realiable, noise insensitive motion detection.

When further developing a detector with two field memories, there is an obvious if regrettable precondition of having to have more memory. It is clear that the functionality of the detector can be improved by adding the number of inputs in the detector and thus enlarging the processing window. In temporal direction this means adding always one or two field memories, in vertical direction, adding one line memory and in horizontal direction, adding one sample delay. Regarding complexity, said additions are approximately in ratio 200,000:700:1.

The following two documents are written by the inventor, namely KOIVUNEN: Motion detection of an interlaced video signal, IEEE TRANSACTIONS ON CONSUMER ELECTRONICS, vol, 40, no. 3, August 1994, NEW YORK US, pages 753-759, XP000471245 (D2) and KOIVUNEN: A noise-insensitive motion detector, IEEE TRANSACTIONS ON CONSUMER ELECTRONICS, vol. 38, no. 3, August 1992, NEW YORK US, pages 168-174, XP000311832 (D3). The first one D2 features the use of recursion in the motion detection of video signal and the second D3 describes a median filter as a postprocessing filter in the motion detection.

The object of the present invention is to remove the above-mentioned disadvantages and improve the quality of the technology related to the prior art. The invention is based on the idea that the differences of the pixels in the fields used for motion detection are compared to a predetermined threshold value and the results of the comparisons are stored. A one-bit memory per each pixel examined is enough to store a comparison result. Since known methods are mainly based on storing the difference using normally eight bits, the method of this invention achieves a 7/8 saving, especially concerning the need for comparison memory.

The invention is characterized by the features of the independent claims 1 and 5.

In an advantageous embodiment of the invention, the signal from the motion detector is taken for further filtering in a post-filter the purpose of which is to eliminate single noise-generated deviations in the detection result. It has been found that a median filter, preferably a symmetric median filter provides an advantageous filter structure. Thanks to the symmetry, the filter eliminates noise-generated errors as effectively in the vertical as in the horizontal direction.

In another advantageous embodiment of the invention, the filtered motion detection signal is further taken to a recursive interpolation element which takes into account the previous calculated result when calculating the new sample. Then, especially the interpolation of moving samples can be improved. In addition, by means of recursion it is possible to reduce the serration of diagonal edges in the recursion direction in slow motion and to reduce one-sample-long errors in slightly wider motion.

The invention is described in more detail with reference to the accompanying drawing, in which
- Figs. 1a and 1b: show a motion detector according to the prior art with one field memory,
- Figs. 2a to 2c: illustrate motion detection with one field memory according to the prior art in the case of a moving bar,
- Figs. 3a and 3b: correspondingly illustrate motion detection with two field memories,
- Figs. 4a to 4c: illustrate the operation of motion detection implemented with two field memories in the case of a moving bar,
- Figs. 5a to 5d: illustrate in a simplified manner the operation of motion detection according to the invention,
- Figs. 6a to 6c: are simplified three-dimensional illustrations of the operation of motion detection according to the invention,
- Fig. 7: is a simplified block diagram of an advantageous embodiment of the motion detector according to the invention,
- Figs. 8a to 8c: illustrate the effect of recursion on motion detection according to the prior art in the case of a moving bar,
- Figs. 9a to 9c: illustrate the operation of motion detection according to the invention in the case of a moving bar,
- Fig. 10: shows the motion detection signal produced by the motion detector according to the invention, and
- Fig. 11: shows the filtered motion detection signal produced by the motion detector according to the invention.

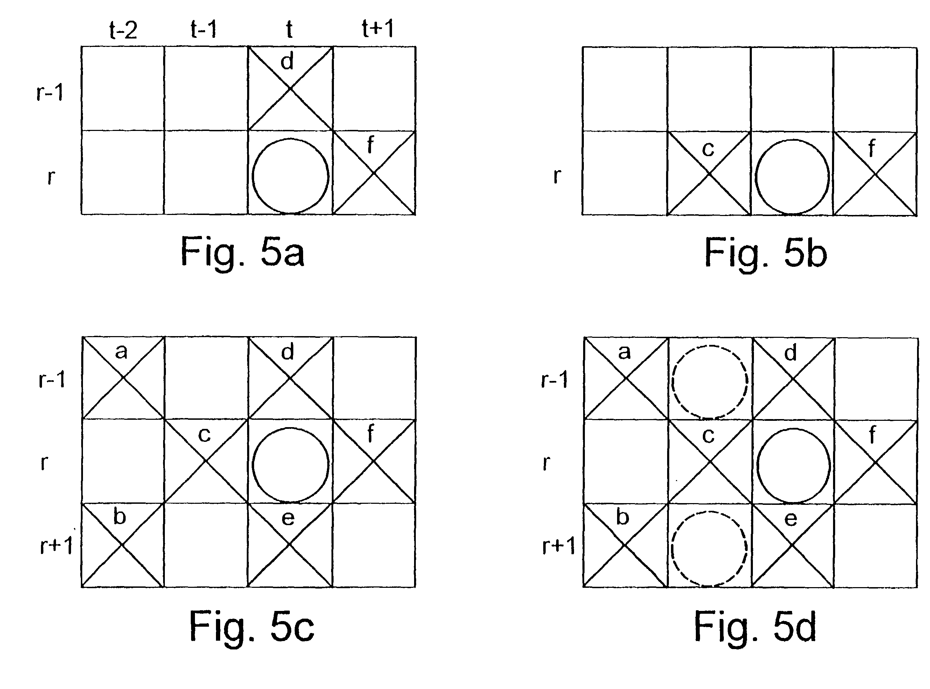

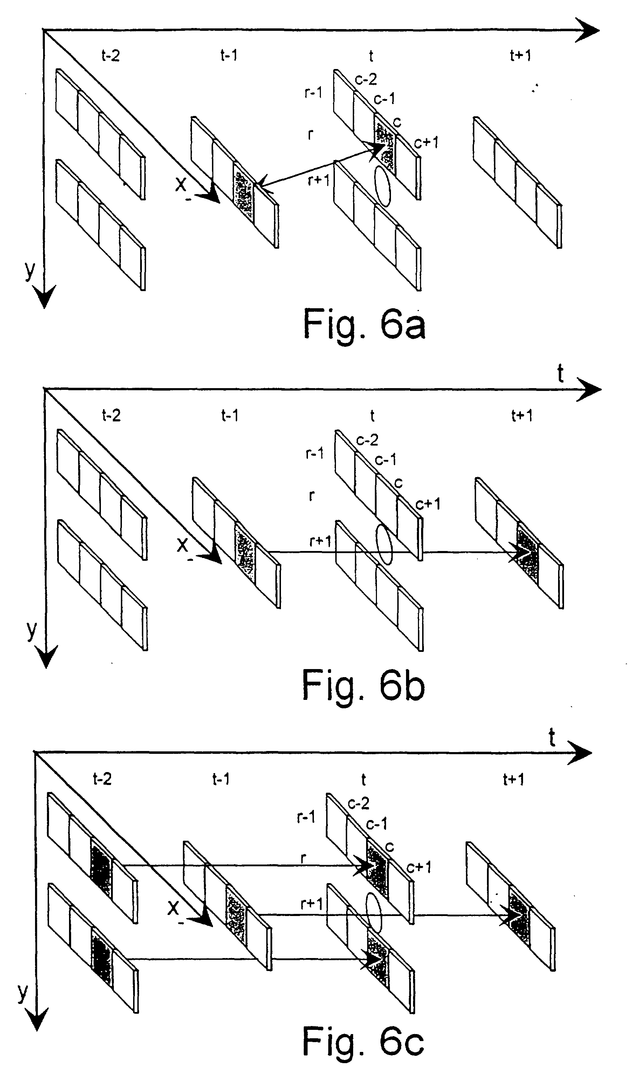

Figs. 5a to 5d illustrate in a simplified manner the operation of motion detection according to the invention. The sample space in the figures is vertical-temporal, i.e. the y-axis contains the samples of successive lines r-1, r, r+1 of a field, and the x-axis contains the successive fields. Thus, samples a and b are from one and the same field (t-2) and samples d and e are from one and the same field (t). Samples a and d, samples c and f and samples b and e are values of one and the same sample at different moments of time. Figs. 6a, 6b and 6c illustrate the case of Figs. 5a, 5b and 5c in a three-dimensional manner, wherein lines r-1, r, r+1 are along the x-axis, the field is represented by the xy-plane and successive fields are in the direction of the t-axis.

Figs. 5a and 6a show a motion detector using one field memory. A motion decision is calculated on the basis of the absolute value of the difference of samples d and f, and the sample examined, marked O in the drawing, involves movement if |*d* - *f*| > *threshold value*. With a detector using one field memory the detection result is improved as compared to current known methods mainly in a situation in which a repetitive structure, such as a fence or striped clothing, moves at a speed which is near the structure's repetition interval/frame. However, the disadvantages of the detector with one field memory, such as the fact caused by the interlacing of the TV signal that the previous detections do not completely correspond to the same pixel at different moments of time, are the reason why a detector with one field memory cannot achieve motion detection reliable enough.

Figs. 5b and 6b show a motion detector according to the invention implemented using two field memories. The motion decision is made on the basis of the difference of the absolute values of samples c and f so that if |*c* - *f*| > threshold value, then O is moving.

The motion detector can be further improved using a motion detector with three field memories as shown in Figs. 5c, 5d and 6c. The detector in Figs. 5c and 6c calculates the sum of the absolute value of the difference of samples a and d, the absolute value of the difference of samples c and f, and the absolute value of the difference of samples b and e, and compare it to a threshold value. If the sum of the absolute values is greater than the threshold value multiplied by three, a decision is made that O is moving, or
If (|*a* - *d*| + |*c* - *f*| + |*b* - *e*| > 3 · *threshold value*), then O is moving.

The motion decision that can be represented with one bit is stored in memory for later processing. In Fig. 5d, the detector of Figs. 5c and 6c is simplified in that the detector separately compares the absolute values of the differences to a predetermined threshold value, or
If (|*a* - *d*| > *threshold value or* |*c* - *f*| > *threshold value or* |*b* - *e*| > *threshold value),* then O is moving.

In the detector of Figs. 5c and 6c, all samples as such are variables in the expression for the motion decision whereas in the detector of Fig. 5d it suffices to store the one-bit partial motion decisions from the preceding fields and to use these as variables in the motion detection expression, thus making the implementation of the motion detector simpler and less memory-consuming.

It has been found that an advantageous threshold value for motion detectors implemented with the method according to the invention is 8. The reason for this is that since 2³ = 8, which corresponds to 1000 in the binary system, the method can avoid extra multiplications.

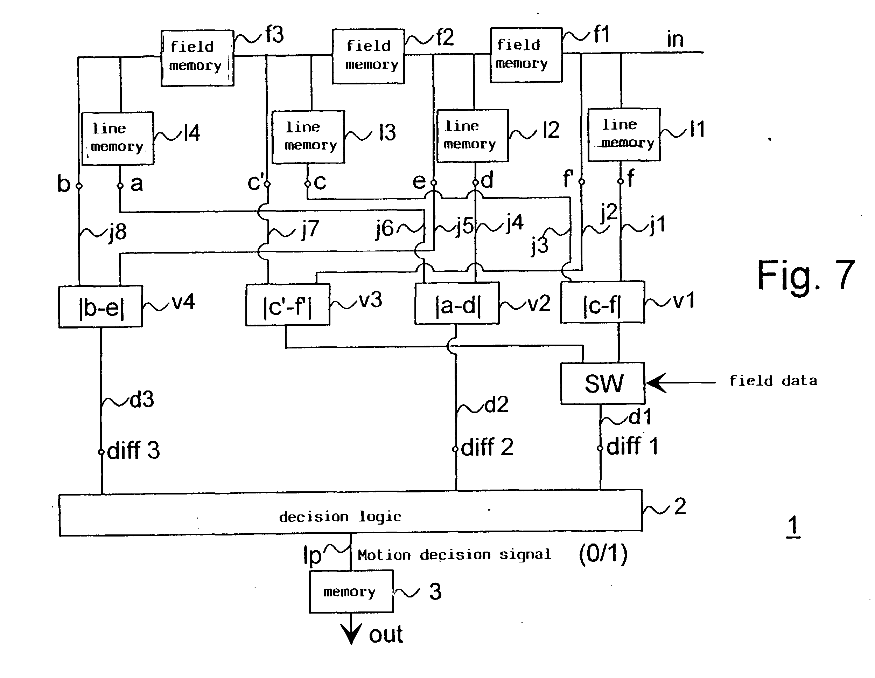

Fig. 7 shows in simplified block diagram format an advantageous motion detector 1 according to the invention. The lines in the block diagram describe buses, and each bus advantageously corresponds to the number of bits in the digital video signal samples, which in the most common applications is eight bits. The motion detector uses line memories into which the samples of one line can be advantageously stored so that when a new sample arrives the samples in the line memory are shifted to the next memory location, and the sample in the last memory location is shifted to the line memory output. Thus the line memory output gives a sample sequence delayed by one line. Similarly, the field memories used in the motion detector can store the samples of one field which are also shifted forward as a new sample arrives in the memory, whereby the field memory output produces a sample sequence delayed by one field. Advantageously the comparison elements are such that they first perform a subtraction for two binary numbers. Then the result of the subtraction is compared to a predetermined threshold value, e.g. by performing a new subtraction between the result of the first subtraction and the threshold value. This will result in a one-bit comparison data. The subtraction circuits and the line and field memories are components known to one skilled in the art and therefore it is unnecessary to describe them in further detail in this context.

A digital video signal, preferably a luminance signal, is taken through the in-line to the motion detector 1. From line in the video signal is taken to the input of a first field memory f1, input of a first line memory l1 and to a third comparison element v3. From the output of the first field memory f1 the video signal, which is delayed by one field, is taken to the input of a second field memory f2, input of a second line memory l2 and to a fourth comparison element v4. From the output of the first line memory l1 the video signal, which is delayed by one line, is taken to a first comparison element v1. At the output of the second field memory f2 the video signal is delayed by two fields. This video signal is taken to the input of a third field memory f3, input of a third line memory l3 and to the third comparison element v3. At the output of the third field memory f3 the video signal is delayed by three fields. The output of the third field memory is further connected to the input of a fourth line memory l4 and to the fourth comparison element v4. Controlling of field memories f1 to f4 and line memories l1 to l4 is implemented in a known manner (not shown) so that always when a new pixel (sample) arrives in the motion detector 1 via the input line in, the previous samples are shifted one step forward.

Let us examine a situation at moment t+1 when sample f arrives in the motion detector 1. Samples a and b have arrived in the motion detector at moment t-2, sample c is from moment t-1, samples d and e are from moment t, as is sample 0 which is the sample examined. In this situation sample a is at the output of the fourth line memory which is connected to the first input of the second comparison element via conductor j6. At the output of the third field memory f3 there is sample b which is connected via line j8 to the first input of the fourth comparison element v4. Similarly, at the output of the third line memory l3 there is sample c which is taken via a third conductor j3 to the first comparison element v1, to its first input. Sample e at the output of the first field memory f1 is taken via a fifth conductor j5 to the fourth comparison element v4, to its second input. Sample d at the output of the second line memory l2 is connected via a fourth conductor j4 to the second input of the second comparison element v2. Similarly, sample f is at the output of the first line memory l1 and it is connected to the second input of the first comparison element v1. The comparison operations in the method according to the invention are then performed in a manner such that the absolute value of the difference of samples a and d is examined in the second comparison element. The absolute value of the difference is compared to a predetermined threshold value which is advantageously 8, and the result from the comparison is taken via a second comparison line d2 to the decision logic 2. The result of the comparison is in the form of binary data (0/1) and 0 indicates, for example, that the absolute value of the difference is smaller than or equal to the predetermined threshold value and similarly, binary information 1 corresponds to the fact that the absolute value of the difference is greater than the predetermined threshold value. Comparisons in the first comparison element v1 for the difference of samples c and f and in the fourth comparison element v4 for the difference of samples b and e are performed in the same manner. The resulting data are taken from the first comparison element v1 via switch sw to the decision logic 2. Similarly, comparison data from comparison element v4 are taken to the decision logic 2 via conductor d3. The final motion decision is made in the decision logic 2 by examining the states of the comparison data lines d1, d2 and d3, and the motion decision is set to 'moving' if at least one comparison data line is in state 1.

The motion decision is taken via a motion decision conductor lp to be stored in a motion decision memory 3. The output (out) of the motion detector 1 gives the motion detection signal.

The above example corresponds to a situation in which the sample O examined is in an even-numbered field. When examining a sample O in an odd field, the procedure is very much alike. The main difference is that the third comparison element v3 is used instead of the first comparison element v1, thus examining samples c' and f' instead of samples c and f. Switch sw is used for taking the comparison data from the third comparison element via the comparison data line d1 to the decision logic 2, and comparison is performed as described above. The differences in operation are caused mainly by the fact that a TV signal is usually interlaced and the corresponding lines of successive fields do not completely correspond to samples taken from the same location.

Nowadays, the motion detector illustrated by the block diagram in Fig. 7 can be easily implemented using digital signal processors DSP designed especially for digital signal processing.

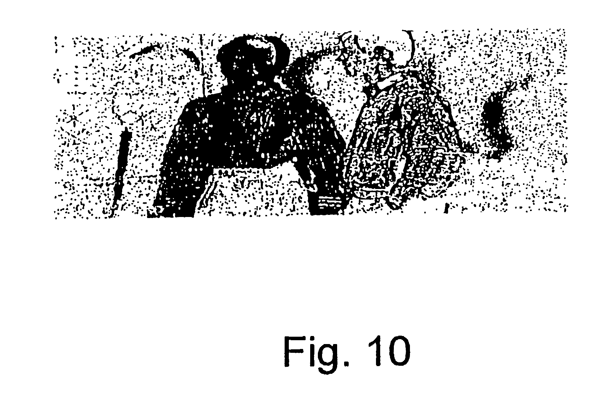

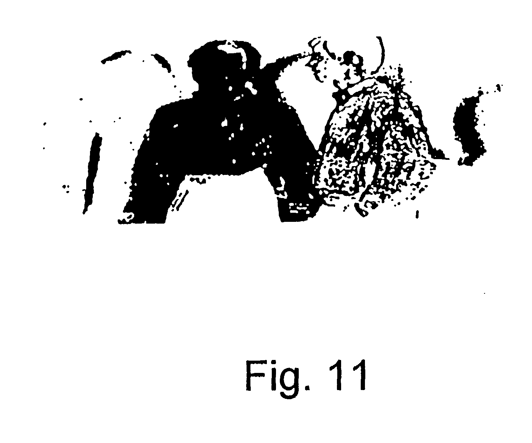

In an advantageous embodiment of the invention the motion detection signal from the motion detector is further taken to a separate filter (not shown) which is preferably a median filter. When using a 9-point spatial 3x3 mask, which has been found suitable for the purpose, it is achieved an effective motion detection signal filtering, thus considerably reducing the effect of noise on the motion detection result. In the filtering, the motion decision signals of the pixels around the pixel examined, i.e. the pixels of the preceding and following line at moments t-1, t and t+1 as well as the pixels of the same line at moments t-1 and t+1, are also used as filter inputs, in addition to the motion decision signal of the pixel examined. The middlemost, i.e. fifth, sample in the sample sequence, produced using these values and arranged according to the magnitude, is chosen as filter output. Fig. 10 shows a motion detection signal produced by a motion detector according to the invention before filtering, and Fig. 11 shows the motion detection signal after a nine-point median filter. Practically all noise-produced detection errors have been filtered out and the result is a uniform motion detection field, as desired.

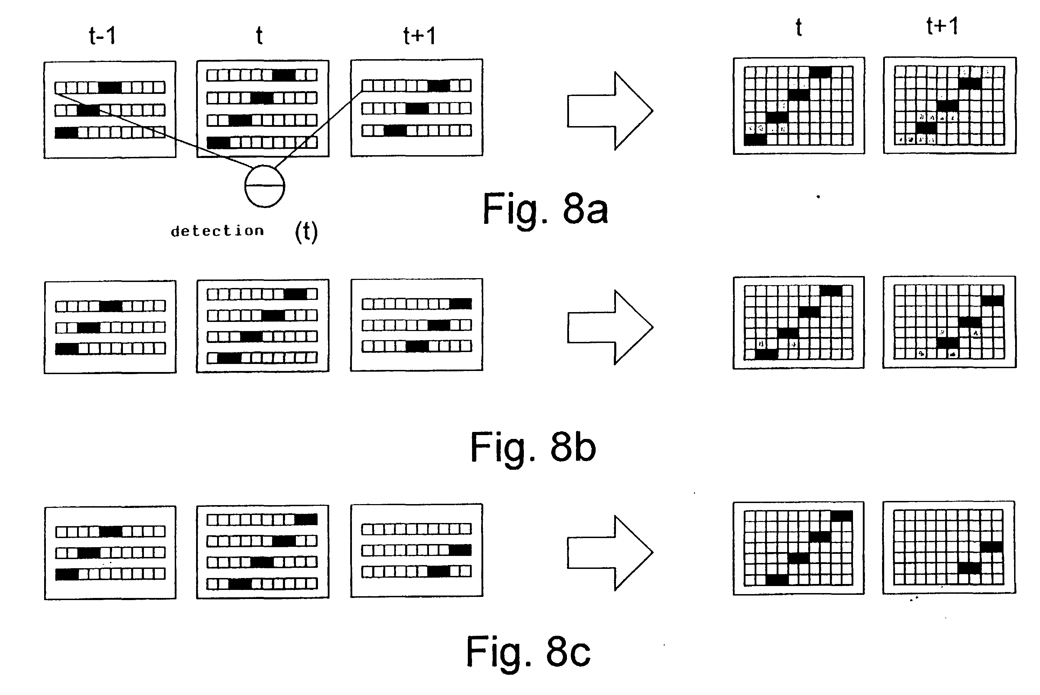

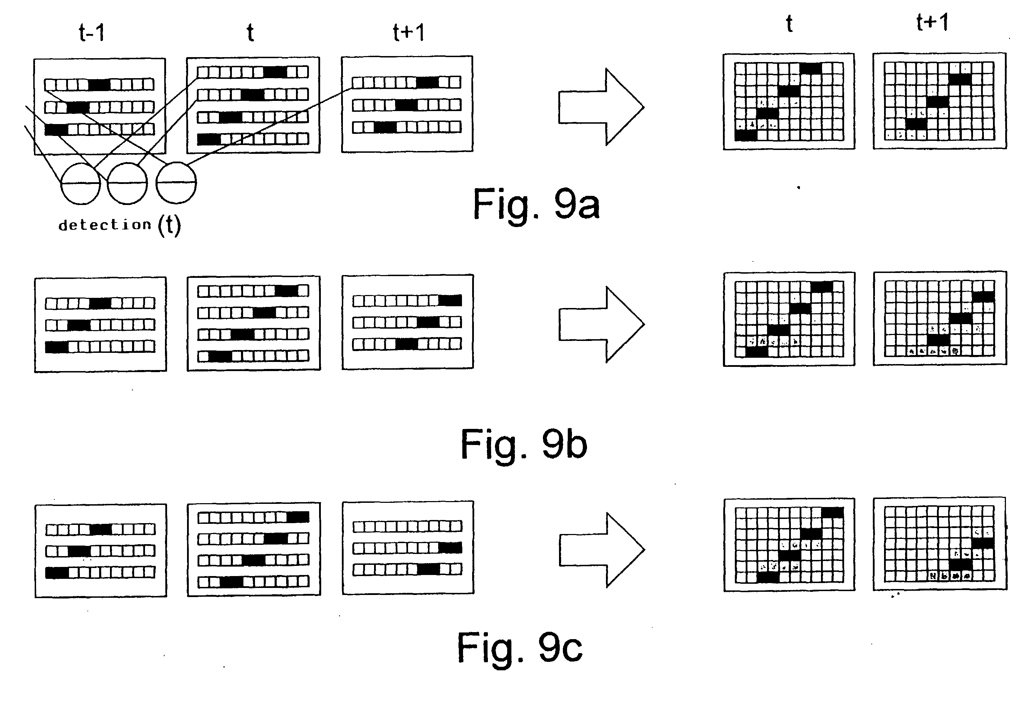

In another advantageous embodiment of the invention the filtered motion detection signal is interpolated recursively, i.e. taking into account the previous calculated result when calculating a new sample. Recursion is advantageous especially in certain motion situations which are presented in Figs. 8a to 8c. Figs. 8a to 8c are comparable to Figs. 4a to 4c as both cases use the same motion detection signal achieved in a known manner. By examining the figures we can see that recursion reduces serration in the recursion direction (starting from the left in this case) in slow motion (8.a) and also reduces one-sample-long errors in slightly wider motion (8.b). Corresponding to Figs. 8a to 8c, Figs. 9a to 9c illustrate detection of an object moving at different speeds using the method according to the invention. We can see from the figures that motion detection implemented with a wider window produces in all illustrated cases a better result than conventional methods using one or two field memories.

The method according to the invention can be advantageously applied e.g. in the conversion of the line frequency of a TV picture, using the motion detection signal to control a motion adaptive interpolator.

## Claims

1. A method for detecting motion in a digital video signal, wherein
- pixels of at least two successive fields are used and pixels of at least one of the fields are stored and
- differences are produced for the pixels of the fields,
- each of the differences is compared to a predetermined threshold value,
- motion decision for each pixel is made using the result of at least one comparison,
**characterized in that** to produce a motion detection signal
- each motion decision is represented with one bit and stored,
- each motion decision is spatially filtered by utilizing the motion decisions of the pixels around the pixel in question, and
- selection of a final motion detection signal is executed by recursive interpolation wherein the preceding motion detection result is taken into account when calculating a corresponding new sample.

2. The method of claim 1, **characterized in that** the motion detection signal is used for controlling a motion adaptive interpolator.

3. An apparatus (1) for detecting motion in a digital video signal, comprising
- means (f1, f2, f3) for storing pixels of at least one field,
- means (v1, v2, v3, v4) for producing a difference of pixels in the fields,
- means (v1, v2, v3, v4) for comparing each difference result to a predetermined threshold value, and
- means (2) for making motion decision bit for each pixel using at least one comparison result, **characterized in that** it further comprises
- means (3) for storing the motion decisions represented with one bit,
- means for spatially filtering each motion decision by utilizing the motion decisions of the pixels around the pixel in question, and
- means for executing the selection of a final motion detection signal by recursive interpolation wherein the preceding motion detection result is taken into account when calculating a corresponding new sample.

4. The apparatus (1) of claim 3, **characterized in that** the means for filtering include a median filter.

## Patentansprüche

1. Verfahren zum Erfassen der Bewegung in einem digitalen Videosignal, bei dem
- Pixel von wenigstens zwei aufeinander folgenden Bildern verwendet werden und Pixel von wenigstens einem der Bilder gespeichert werden und
- Unterschiede für die Pixel in den Bildern erzeugt werden,
- jeder der Unterschiede mit einem vorgegebenen Schwellenwertverglichen wird,
- eine Bewegungsentscheidung für jedes Pixel unter Verwendung des Ergebnisses wenigstens eines Vergleichs ausgeführt wird,
**dadurch gekennzeichnet, dass** für die Erzeugung eines Bewegungserfassungssignals
- jede Bewegungsentscheidung durch ein Bit repräsentiert und gespeichert wird,
- jede Bewegungsentscheidung unter Verwendung der Bewegungsentscheidungen der Pixel um das fragliche Pixel räumlich gefiltert wird und
- die Auswahl eines endgültigen Bewegungserfassungssignals durch rekursive Interpolation ausgeführt wird, wobei das vorhergehende Bewegungserfassungsergebnis berücksichtigt wird, wenn ein entsprechender neuer Abtastwert berechnet wird.

2. Verfahren nach Anspruch 1, **dadurch gekennzeichnet, dass** das Bewegungserfassungssignal zum Steuern eines bewegungsadaptiven Interpolators verwendet wird.

3. Vorrichtung (1) zum Erfassen einer Bewegung in einem digitalen Videosignal, die umfasst:
- Mittel (f1, f2, f3) zum Speichern von Pixeln wenigstens eines Bildes,
- Mittel (v1, v2, v3, v4) zum Erzeugen eines Unterschiedes von Pixeln in dem Bild,
- Mittel (v1, v2, v3, v4) zum Vergleichen jedes Unterschiedergebnisses mit einem vorgegebenen Schwellenwert und
- Mittel (2) zum Bilden eines Bewegungsentscheidungsbits für jedes Pixel unter Verwendung wenigstens eines Vergleichsergebnisses, **dadurch gekennzeichnet, dass** sie ferner umfasst:
- Mittel (3) zum Speichern der Bewegungsentscheidungen, die durch ein Bit repräsentiert werden,
- Mittel zum räumlichen Filtern jeder Bewegungsentscheidung durch Verwenden der Bewegungsentscheidungen der Pixel um das fragliche Pixel und
- Mittel zum Ausführen der Auswahl eines endgültigen Bewegungserfassungssignals durch rekursive Interpolation, wobei das vorhergehende Bewegungserfassungsergebnis berücksichtigt wird, wenn ein entsprechender neuer Abtastwert berechnet wird.

4. Vorrichtung (1) nach Anspruch 3, **dadurch gekennzeichnet, dass** die Mittel zum Filtern ein Medianfilter enthalten.

## Revendications

1. Procédé de détection de mouvement dans un signal vidéo numérique, dans lequel
- les pixels d'au moins deux trames successives sont utilisés et les pixels d'au moins une des trames sont mémorisés et
- les différences sont produites pour les pixels des trames,
- chacune des différences est comparée à une valeur de seuil prédéterminée,
- la décision de mouvement pour chaque pixel est effectuée en utilisant le résultat d'au moins une comparaison,
**caractérisé en ce que** pour produire un signal de détection de mouvement
- chaque décision de mouvement est représentée avec un bit et mémorisée,
- chaque décision de mouvement est filtrée spatialement en utilisant les décisions de mouvement des pixels autour du pixel en question, et
- la sélection d'un signal de détection de mouvement final est exécutée par une interpolation récursive dans laquelle le résultat de détection de mouvement précédent est pris en compte lors du calcul d'un nouvel échantillon correspondant.

2. Procédé selon la revendication 1, **caractérisé en ce que** le signal de détection de mouvement est utilisé pour commander un interpolateur adaptatif de mouvement.

3. Appareil (1) de détection de mouvement dans un signal vidéo numérique, comprenant
- des moyens (f1, f2, f3) pour mémoriser les pixels d'au moins une trame,
- des moyens (v1, v2, v3, v4) pour produire une différence de pixel dans les trames,
- des moyens (v1, v2, v3, v4) pour comparer chaque résultat de différence à une valeur de seuil préderminée, et
- des moyens (2) pour effectuer un bit de décision de mouvement pour chaque pixel utilisant au moins un résultat de.comparaison, **caractérisé en ce qu'**il comprend en outre
- des moyens (3) pour mémoriser les décisions de mouvement représentées avec un bit,
- des moyens pour filtrer spatialement chaque décision de mouvement en utilisant les décisions de mouvement des pixels autour du pixel en question, et
- des moyens pour exécuter la sélection d'un signal de détection de mouvement final par une interpolation récursive dans laquelle le résultat de détection de mouvement précédent est pris en compte lors du calcul d'un nouvel échantillon correspondant.

4. Appareil (1) selon la revendication 3, **caractérisé en ce que** les moyens de filtrage comprennent un filtre médian.
